Europäisches Patentamt

European Patent Office

Office européen des brevets

(19)

(11) Numéro de publication: **0 359 600**
**A1**

(12) **DEMANDE DE BREVET EUROPEEN**

(21) Numéro de dépôt: **89402121.1**

(22) Date de dépôt: **26.07.89**

(51) Int. Cl.⁵: **B 60 P 1/44**

(30) Priorité: **14.09.88 FR 8811974**

(43) Date de publication de la demande:
**21.03.90 Bulletin 90/12**

(84) Etats contractants désignés:
**BE CH DE ES GB IT LI NL SE**

(71) Demandeur: **ERHEL**
**32, Avenue de Stalingrad**
**F-21100 Dijon (FR)**

(72) Inventeur: **Launay, Pierre Eugène Marie**
**20 Bld. de Troyes**
**F-21240 Talant (FR)**

**Minois, Alain**
**Résidence le Colombier 30A rue de Chanzy**
**F-21100 Dijon (FR)**

(74) Mandataire: **Loyer, Bertrand**
**Cabinet Pierre Loyer 77, rue Boissière**
**F-75116 Paris (FR)**

(54) **Perfectionnement aux hayons élévateurs repliables.**

(57) Hayon élévateur repliable du type comportant un cadre de levage (14) articulé sur une poutre (15) solidaire du châssis (11) d'un véhicule, ledit cadre (14) portant à son extrémité une pièce de liaison (16) articulée sur ledit cadre (14) et sur laquelle est à son tour articulée une plate-forme repliable (17). A l'extrémité du cadre de levage (14) est monté à pivotement un bras basculant (19) contre lequel prend appui la plate-forme repliée (17), ce bras basculant (19) étant muni d'une béquille pendulaire (22) qui vient prendre appui sur le sol lorsque le cadre de levage (14) s'abaisse ; cette béquille (22) faisant progressivement basculer le bras basculant (19) vers le haut au fur et à mesure que se poursuit la descente du cadre de levage (14) et ledit bras basculant (19) entraînant avec lui la plate-forme repliée (17).

Fig:1

EP 0 359 600 A1

**Description**

## Perfectionnement aux hayons élévateurs repliables

La présente invention est relative à un perfectionnement aux hayons élévateurs et plus particulièrement aux hayons élévateurs du type repliable.

Il est connu de disposer à l'arrière des camions ou aux véhicules destinés à porter des charges, un hayon qui, en position de repos, vient se plaquer verticalement contre la porte arrière du véhicule. Lorsque l'on veut décharger le véhicule, on fait d'abord pivoter ce hayon ou plate-forme de 90° pour l'amener en position horizontale et ensuite on abaisse et/ou on élève cette plate-forme parallèlement à elle-même au moyen du bras de levage (généralement réunis en un cadre de levage et d'un vérin de levage.

Le fait de plaquer verticalement la plate-form contre la porte arrière du véhicule comportant certains inconvénients, on a proposé de réaliser le hayon de façon qu'il puisse être replié sur lui-même et escamoté sous le châssis du véhicule. Cette disposition présente l'inconvénient qu'après avoir replié la plate-forme sur elle-même, il faut encore la faire basculer pour pouvoir l'escamoter et, s'il est relativement facile de replier la partie arrière, légère, de la plate-forme sur sa partie avant, il est déjà plus difficile, du fait du poids, de faire basculer les deux parties repliées l'une sur l'autre, mais il est surtout extrêmement difficile de faire basculer dans l'autre sens la plate-forme repliée pour pouvoir l'utiliser.

Pour rendre possible cette opération, il est connu de déployer à l'horizontale un bras escamotable sur lequel vient prendre appui la plate-forme repliée pendant la descente du cadre de levage, ce qui redresse pratiquement à la verticale la plate-forme repliée que l'on peut ensuite facilement faire basculer.

Il s'avère cependant, à l'usage, que les positions relatives du bras d'appui et de la plate-forme repliée ne sont pas les mêmes suivant que le véhicule est vide ou bien en charge et que dans ce dernier cas, la plate-forme repliée n'est pas suffisamment relevée, de sorte que l'opérateur ne peut que très difficilement la relever et risque même de ne pas y arriver.

La présente invention a pour object de supprimer cet inconvénient en proposant un dispositif de redressement d'un plate-form repliée qui amène celle-ci en position pratiquement verticale, indépendamment de la charge du véhicule.

La présente invention concerne un hayon élévateur repliable du type comportant un cadre de levage articulé sur le châssis du véhicule à l'extrémité duquel est articulée une pièce de liaison sur laquelle est articulée une plate-forme repliable, caractérisé par le fait qu'à l'extrémité du cadre de levage est monté à pivotement un bras basculant contre lequel prend appui la plate-forme repliée, ce bras basculant étant muni d'une béquille qui vient prendre appui sur le sol lorsque le cadre de levage s'abaisse, cette béquille faisant progressivement basculer ledit bras basculant vers le haut au fur et à mesure que se poursuit la descente du cadre de levage; et le bras basculant entraînant avec lui la plate-forme repliée et la redressant ainsi progressivement; les écarts entre les points d'appui et points d'articulation étant déterminés de façon que lorsque la pièce de liaison touche le sol, la plate-form repliée soit pratiquement en position verticale.

A titre d'exemples non limitatifs et pour faciliter la compréhension de l'invention, on a représenté aux dessins annexés

figures 1 à 4, quatre vues schématiques illustrant le fonctionnement du dispositif connu;

figures 5 à 8, quatre vues schématiques illustrant la constitution et le fonctionnement du dispositif selon la présente invention.

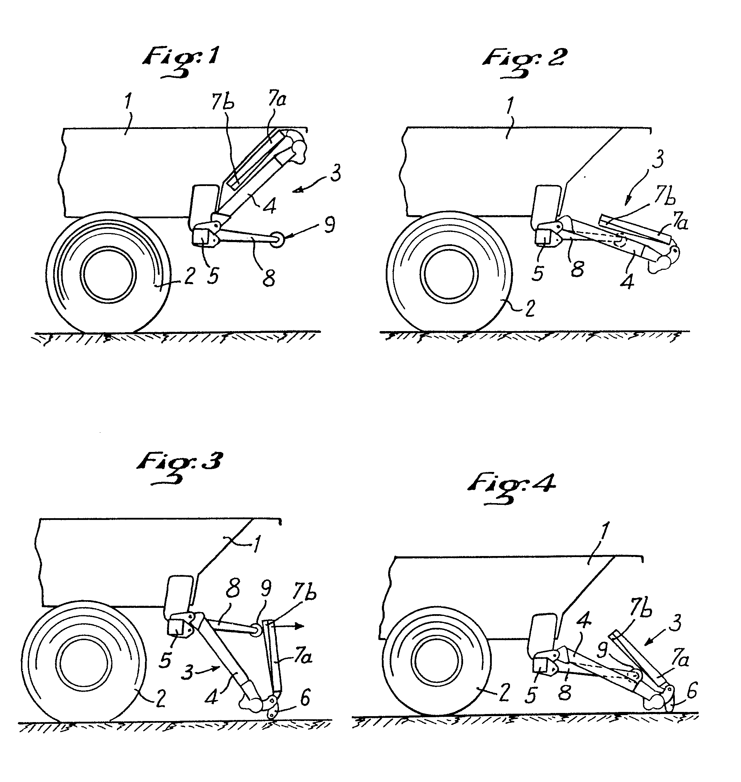

En se reportant aux figures 1 à 4, on voit que le châssis 1 d'un véhicule porte légèrement en arrière des roues 2, un dispositif de hayon repliable désigné par la référence générale 3.

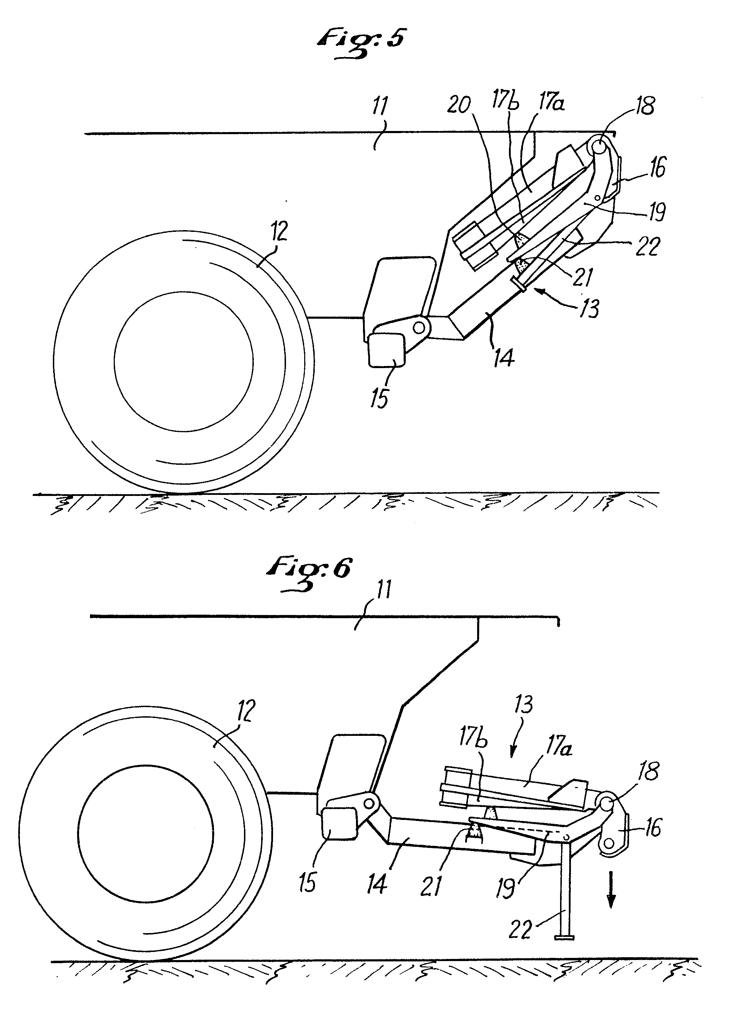

Ce dispositif comporte un cadre de relevage 4 articulé sur une poutre porteuse 5 fixée au châssis 1. A titre de simplification, les moyens de commande du dispositif ne sont pas représentés. A l'extrémité du cadre de levage 4 est articulée une pièce de liaison 6 sur laquelle est articulée une plate-forme de levage 7, qui est en deux parties 7a et 7b qui sont articulées l'une à l'autre par toute charnière appropriée et qui sont représentées repliées l'une sur l'autre. Le dispositif comporte un bras horizontal 8, ou bras d'appui, portant à son extrémité un galet 9. Lorsque le cadre de levage 4 qui porte la pièce de liaison 6 et la plate-forme repliée 7 descend, la partie 7b, repliée, de ladite plate-forme 7 vient en contact avec le galet 9. Comme celui-ci demeure fixe en position, au fur et à mesure que le cadre 4 descend, la plate-forme pivote pour prendre la position représentée à la figure 3 où elle est pratiquement verticale.

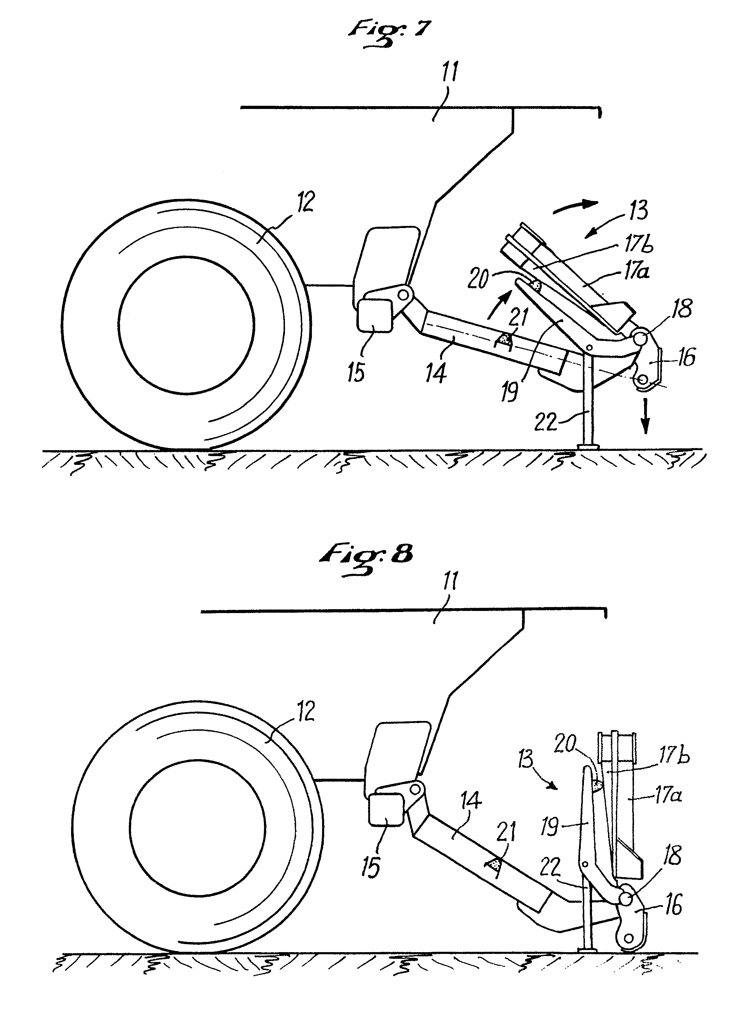

La figure 3 correspond au cas où le véhicule est vide et la figure 4 au cas où il est chargé: en examinant comparativement ces figures, on voit que lorsque le véhicule est chargé, le châssis 1 s'affaisse vers le bas, ce qui a pour effet que le bras 8 se rapproche du sol. Il en résulte que le galet d'appui 9 se rapproche de l'articulation de la plate-forme 7 sur la pièce 6 et que la plate-forme 7 bascule vers l'avant dans une position où il est très difficile, sinon impossible de la relever manuellement.

Les figures 5 à 8 illustrent le dispositif selon la présente invention.

Le châssis 11, porté par les roues 12, porte au moyen d'une poutre 15, un dispositif de hayon élévateur désigné par la référence générale 13. Sur la poutre 15 est articulé un cadre de levage 14 à l'extrémité duquel est articulée une pièce de liaison 16. Sur cette pièce de liaison 16 est articulée la plate-forme 17 repliable en deux parties 17a et 17b.

Sur l'axe 18 d'articulation de la plate-forme 17 à la pièce de liaison 16 est articulé un bras basculant 19 qui porte à son extrémité une butée 20 sur laquelle repose la plate-forme repliée 17. De son côté, en position de repos, le bras basculant 19 repose sur une butée 21 solidaire du cadre de levage 14.

Entre le point d'appui de la plate-forme repliée 17 sur le bras basculant 19 et le point d'articulation 18 dudit bras sur la pièce 16 est montée à pivotement une béquille 22.

Sur la figure 5, le dispositif est représenté en position de repos: la plate-forme 17 après avoir été repliée sur elle-même a été basculée autour de l'axe 18, le cadre de relevage 14 a été relevé et la béquille 22 attachée le long dudit cadre 14.

Sur la figure 6, on voit que, lorsque l'on veut mettre en oeuvre le dispositif 13, on détache la béquille 22 qui pend librement à la verticale et on commence à abaisser le cadre 14.

Sur la figure 7, on voit que lorsque l'on continue à abaisser le cadre 14, la béquille 22 vient en contact avec le sol et ne peut plus continuer à s'abaisser. Le cadre 14 continuant à s'abaisser, la béquille 22 fait pivoter le bras basculant 19 autour de son axe 18 et ledit bras basculant 19 entraîne avec lui la plate-forme repliée 17 en rotation autour de l'axe 18. Le mouvement simultané d'abaissement du cadre 14 et de pivotement vers le haut du bras basculant 19, entraînant avec lui la plate-forme repliée 17, se poursuit jusqu'à ce que la pièce 16 touche le sol : les pièces sont alors dans la position représentée à la figure 8. Pour que cela soit possible , il faut que la distance séparant l'axe 18 du sol, la distance séparant le point d'articulation de la béquille 22 du sol et la distance séparant ce point d'articulation dudit axe 18 soient déterminées en conséquence, ce qui est du domaine de l'homme du métier.

Il est évident que si le châssis 11 s'affaisse sur les roues 12, cela changera la position angulaire du cadre de relevage 14 par rapport au sol mais sera sans effet sur la position du bras basculant 19 et donc de la plate-forme repliée 17.

## Revendications

1. Hayon élévateur repliable du type comportant un cadre de levage (14) articulé sur une poutre (15) solidaire du châssis (11) d'un véhicule, ledit cadre (14) portant à son extrémité une pièce de liaison (16) articulée sur ledit cadre (14) et sur laquelle est à son tour articulée une plate-forme repliable (17), caractérisé par le fait que, à l'extrémité du cadre de levage (14) est monté à pivotement un bras basculant (19) contre lequel prend appui la plate-forme repliée (17), ce bras basculant (19) étant muni d'une béquille pendulaire (22) qui vient prendre appui sur le sol lorsque le cadre de levage (14) s'abaisse ; cette béquille (22) faisant progressivement basculer le bras basculant (19) vers le haut au fur et à mesure que se poursuit la descente du cadre de levage (14) et ledit bras basculant (19) entraînant avec lui la plate-forme repliée (17).

2. Hayon élévateur selon la revendication 1, dans lequel les écarts entre les points d'appui et les points d'articulation des différentes pièces şont déterminés de façon que lorsque la pièce de liaison (16) touche le sol, la plate-forme repliée (17) soit pratiquement en position verticale.

3. Hayon élévateur selon la revendication 1 ou 2, dans lequel la pièce de liaison (16), le bras basculant (19) et la plate-forme 17 sont montés à pivotement sur un même axe (18) porté par le cadre de levage (14).

Fig:1

Fig:2

Fig:3

Fig:4

**Fig: 5**

**Fig: 6**

Fig. 7

Fig. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 228 829 (E. DAUTEL GMBH)<br>* figures 1-4 *<br>--- | 1,3 | B 60 P 1/44 |
| A | FR-A-2 438 008 (COLAS DES FRANCS)<br>* figures 1,2 *<br>--- | 1 | |
| A | FR-A-2 140 884 (A.-P. DUPUY et al.)<br>----- | | |

DOMAINES TECHNIQUES RECHERCHES (Int. Cl.4)

B 60 P

Le présent rapport a été établi pour toutes les revendications

| Lieu de la recherche | Date d'achèvement de la recherche | Examinateur |
|---|---|---|
| BERLIN | 01-09-1989 | LUDWIG H J |

EPO FORM 1503 03.82 (P0402)